# EUROPEAN PATENT SPECIFICATION

(11) **EP 4 593 361 B1**
(45) Date of publication and mention of the grant of the patent: **09.12.2026**
(21) Application number: 23896291.4
(22) Date of filing: 17.10.2023
(51) Int. Cl.: H04M 1/02, G02F 1/1333, H04M 1/18

(54) **SCREEN COMPONENT ASSEMBLED STRUCTURE AND ASSEMBLY METHOD THEREFOR, AND ELECTRONIC DEVICE**
ZUSAMMENGESETZTE BILDSCHIRMKOMPONENTENSTRUKTUR UND MONTAGEVERFAHREN DAFÜR SOWIE ELEKTRONISCHE VORRICHTUNG
STRUCTURE ASSEMBLÉE DE COMPOSANT D'ÉCRAN ET SON PROCÉDÉ D'ASSEMBLAGE, ET DISPOSITIF ÉLECTRONIQUE

(30) Priority: 28.11.2022 CN 202211502488
(43) Date of publication of application: 30.07.2025
(73) Proprietor: Honor Device Co., Ltd., Shenzhen, Guangdong 518040 (CN)
(72) Inventor: ZHANG, Hongming, Shenzhen, Guangdong 518040 (CN); HUO, Guoliang, Shenzhen, Guangdong 518040 (CN); LIU, Bao, Shenzhen, Guangdong 518040 (CN)
(74) Representative: MERH-IP Matias Erny Reichl Hoffmann Patentanwälte PartG mbB
(86) International application number: PCT/CN2023/125004
(87) International publication number: WO 2024/114136

(56) References cited:
- WO-A1-2018/120418
- CN-A- 107 831 829
- CN-A- 113 891 586
- CN-A- 114 842 737
- CN-A- 116 708 617
- CN-U- 215 646 872
- CN-U- 215 867 631
- CN-U- 215 934 895
- CN-U- 217 880 265
- KR-A- 20170 079 968
- US-A1- 2020 249 517

## Description

This application claims priority to Chinese Patent Application No. 202211502488.9, filed with the China National Intellectual Property Administration on November 28, 2022 and entitled "SCREEN COMPONENT ASSEMBLED STRUCTURE, ASSEMBLING METHOD FOR SCREEN COMPONENT, AND ELECTRONIC DEVICE".

### TECHNICAL FIELD

This application relates to the field of electronic devices, and in particular, to a screen component assembled structure and an electronic device.

### BACKGROUND

With the progress of technologies, people increasingly pursue extremely narrow framing for a display screen of an electronic device (for example, a mobile phone), so as to achieve a larger screen-to-body ratio.

The screen-to-body ratio of the display screen depends to a large extent on an encapsulation mode of the display screen. To make the screen-to-body ratio of the electronic device larger, at present, a back surface of the display screen is usually adhered to a middle frame by using a back adhesive. A narrow gap is reserved between a side wall of the display screen and an inner side wall of the middle frame. The narrow gap provides an assembling gap between the display screen and the middle frame. In addition, the display screen is protected by using the narrow gap, to avoid the display screen from being collided to be broken with the middle frame in a risky scenario of collision or falling.

However, due to the narrow gap between the display screen and the middle frame, dust is easily accumulated in the narrow gap, and there is a risk of a protection failure during long-term use.
CN 114 842 737 A discloses a mobile device comprising a middle frame with four interconnected edges, where a first edge faces a bending portion of a flexible circuit board. This document introduces an adhesive layer which may include a moisture or UV-cured material so as to bond a display of the device to the edges furthest from the circuit board. This layer provides a solid exterior and a viscous, gel-like interior.

### SUMMARY

This application provides a screen component assembled structure, a method for assembling the screen component, and an electronic device. The screen component assembled structure has a good protective effect based on achieving narrow bezel, and reliability of the electronic device can be improved. The technical improvement is achieved based on the solution provided according to the claims.

According to a first aspect, this application provides a screen component assembled structure, including a screen component, a middle frame, and a protective glue layer.

The middle frame includes a middle plate portion and a border frame portion. The border frame portion is arranged around a peripheral side of the middle plate portion. The screen component is supported on the middle plate portion. A protective gap is provided between a side wall of the screen component and the border frame portion. The protective glue layer fills the protective gap.

The protective glue layer is divided into a high-modulus portion and a low-modulus portion in a thickness direction. The high-modulus portion is located on one side of the low-modulus portion facing away from the middle plate portion.

According to the screen component assembled structure provided in this application, the protective gap is provided between the side wall of the screen component and the border frame portion, and the screen component and the border frame portion do not overlap, so that a narrow frame effect can be achieved. Based on this, the protective glue layer fills the protective gap, and the protective glue layer blocks the protective gap, so that entire machine protection is performed by using the protective glue layer. The protective glue layer has the high-modulus portion and the low-modulus portion, and the high-modulus portion is located on one side of the low-modulus portion facing away from the middle plate portion of the middle frame. The high-modulus portion has a high modulus and high hardness, and the low-modulus portion has a low modulus and good elasticity, so that the protective glue layer can have both a protective function and a buffering function, can prevent foreign matters from entering a display screen and protect the working performance of the display screen, and can provide buffering between the border frame portion of the middle frame and a side wall of the screen component, to prevent the screen component from being damaged.

In a possible implementation, the screen component includes a display screen and a protection cover plate; the display screen is connected to the middle plate portion; and the protection cover plate is located on one side of the display screen facing away from the middle plate portion.

The high-modulus portion extends from a side of the protection cover plate to a side of the display screen; and the low-modulus portion covers at least a portion of a region of the side of the display screen.

The high-modulus portion extends from the side of the protection cover plate to the side of the display screen, and the high-modulus portion is located on one side at which an appearance surface of the screen component is located, to achieve an adhesion function and a protective function, to protect the working performance of the display screen. The low-modulus portion covers at least a portion of the region of the side of the display screen, so that an impact force from the border frame portion of the middle frame to the side wall of the display screen is absorbed by the buffering function of the low-modulus portion, to protect the display screen from being damaged.

In a possible implementation, one end, oriented to the protection cover plate, of a side wall of the display screen is located in a range covered by the low-modulus portion.

The end, oriented to the protection cover plate, of the side wall of the display screen is located in the range covered by the low-modulus portion, so that only the low-modulus portion exists in a thickness region at which the side of the display screen is located. The low-modulus portion more easily fills the gap between the display screen and the border frame portion. In addition, the low-modulus portion maximizes a buffering region at the side of the display screen, thereby providing a better protective effect on the display screen.

In a possible implementation, one end of the border frame portion extending to a side of the protection cover plate is a front end surface of the border frame portion, and the protective glue layer extends from the front end surface to the middle plate portion.

By making a top end of the protective glue layer approximately flush with the front end surface of the border frame portion, during adhesive application, the protective glue in a fluid state is located in the protective gap, and a supporting function of the border frame portion facilitates curing and formation of the protective glue into the protective glue layer. In addition, after the protective glue is cured and formed, the protective glue layer is almost entirely located in a shield region of the border frame portion, and the border frame portion can protect the protective glue layer from being scraped and abraded.

In a possible implementation, a back adhesive layer is arranged between the display screen and the middle plate portion.

In a possible implementation, the display screen is an organic light-emitting diode (OLED) display screen.

In a possible implementation, a ground layer is arranged on one side of the OLED display screen facing the middle plate portion, and the protective glue layer extends to be in contact with a surface of the ground layer.

The protective glue layer extends to be in contact with the surface of the ground layer, and the protective glue layer connects the protection cover plate to the ground layer, so that static charges attracted to a surface of the protection cover plate can be eliminated, and problems such as a green screen, non-uniform brightness, and screen flicker can be solved.

In a possible implementation, the protective glue layer extends to be connected to an end surface of the back adhesive layer.

The protective glue layer extends to be connected to the back adhesive layer, so that it can be ensured that the protective glue layer fully fills the protective gap, thereby ensuring that the protective glue layer has good protective and buffering functions. In addition, it can be ensured that the protective glue layer extends to a back surface of the OLED display screen, so that the protective glue layer is in stable contact with the ground layer.

In a possible implementation, the display screen is a liquid crystal display (LCD) screen.

In a possible implementation, at least one side of the LCD screen is connected with a circuit board; the circuit board is located in the protective gap; and the protective glue layer is supported on the circuit board.

In a possible implementation, a modulus range of the high-modulus portion is 40 Mpa to 70 Mpa, and a modulus range of the low-modulus portion is 5 Mpa to 35 Mpa.

By controlling the modulus range of the high-modulus portion of the protective glue layer to be between 40 Mpa and 70 Mpa, the high-modulus portion has high hardness. The high-modulus portion can ensure that the screen component and the border frame portion are closely and securely connected, thereby enhancing the protective effect. By controlling the modulus range of the low-modulus portion of the protective glue layer to be between 5 Mpa and 35 Mpa, the low-modulus portion has sufficient elastic deformation performance, and the low-modulus portion can ensure complete caulking and protect the display screen from being damaged.

In a possible implementation, the protective glue layer is an adhesive layer formed by joint curing by a first curing mode and a second curing mode.

The protective glue layer is jointly cured and formed by two different curing modes, namely, the first curing mode and the second curing mode, so that the protective glue layer has the high-modulus portion and the low-modulus portion which have different moduluses, and the protective glue layer has both an adhesion and fixing function and a buffering function.

In a possible implementation, the first curing mode is a light curing mode, and the second curing mode is a moisture curing mode.

A portion of the protective glue layer close to the protection cover plate is formed into the high-modulus portion by jointly using the light curing mode and the moisture curing mode, and a portion of the protective glue layer close to the middle plate portion of the middle frame is formed into the low-modulus portion by using the moisture curing mode.

In a possible implementation, a depth range of the high-modulus portion is 0.4 mm to 0.6 mm in a thickness direction of the screen component.

According to a second aspect, this application provides a method for assembling a screen component, including:
applying a protective glue on a border frame portion of a middle frame;
mounting the screen component on the middle frame, wherein the protective glue is pressed by a side wall of the screen component; and
curing the protective glue to form a protective glue layer. The protective glue layer has a high-modulus portion and a low-modulus portion; and the high-modulus portion is located on one side of the low-modulus portion facing away from a middle plate portion of the middle frame.

In the method for assembling the screen component provided in this application, the protective glue is applied to the border frame portion of the middle frame. Under the pressing action of the screen component, the protective glue layer may be closely connected between the screen component and the border frame portion. Then, the protective glue is cured to form the protective glue layer. The formed protective glue layer has the high-modulus portion and the low-modulus portion, and the high-modulus portion is located on one side of the low-modulus portion facing away from the middle plate portion of the middle frame. The high-modulus portion has a high modulus and high hardness, and the low-modulus portion has a low modulus and good elasticity, so that the protective glue layer can have both a protective function and a buffering function, can prevent foreign matters from entering a display screen and protect the working performance of the display screen, and can provide buffering between the border frame portion of the middle frame and a side wall of the screen component, to prevent the screen component from being damaged.

In a possible implementation, the curing the protective glue includes:
curing the protective glue by using a first curing mode and a second curing mode, to form the high-modulus portion and a low-modulus portion in the protective glue layer.

The protective glue is jointly cured by two different curing modes, namely, the first curing mode and the second curing mode, so that the formed protective glue layer has the high-modulus portion and the low-modulus portion which have different moduluses, and the protective glue layer has both an adhesion and fixing function and a buffering function.

In a possible implementation, the first curing mode is a light curing mode, and the second curing mode is a moisture curing mode; and the curing the protective glue includes:
illuminating the protective glue on one side facing away from the middle plate portion, to cure the protective glue through the light curing mode; and
making the protective glue react with air, to cure the protective glue through the moisture curing mode.

In the curing process, the protective glue may react with water in the air to perform moisture curing. Meanwhile, the protective glue is illuminated on the side facing away from the middle plate portion, so that a portion of the protective glue layer close to the protection cover plate is formed into the high-modulus portion by jointly using the light curing mode and the moisture curing mode, and a portion of the protective glue layer close to the middle plate portion of the middle frame is formed into the low-modulus portion by using the moisture curing mode.

In a possible implementation, the applying a protective glue on a border frame portion of a middle frame includes:
obliquely placing the middle frame at a preset angle, to make an inner side wall of the border frame portion tilt toward a spraying direction of the protective glue. The inner side wall of the border frame portion is a wall surface of one side of the border frame portion facing the middle plate portion of the middle frame.

By obliquely placing the middle frame, so that the inner side wall of the border frame portion tilts to the spraying direction of the protective glue. An area of the inner side wall of the border frame portion for receiving the protective glue is larger. The inner side wall of the inclined border frame portion can prevent the protective glue from flowing along a surface of the border frame portion, and can stabilize the protective glue on the inner side wall of the border frame portion. In addition, the front end surface of the border frame portion is also covered with a protective glue with a sufficient thickness, so that the protective glue can stably cover the border frame portion.

In a possible implementation, before the curing the protective glue, the method further includes:
erasing the protective glue that spills out of a front end surface of the border frame portion, to make a surface of the protective glue flush with the front end surface of the border frame portion.

According to a third aspect, this application provides an electronic device, including a rear cover and the screen component assembled structure described above. The rear cover is connected to the middle frame, and the rear cover is located on one side of the middle frame facing away from the screen component.

According to the electronic device provided in this application including the screen component assembled structure and the rear cover. In the screen component assembled structure, the protective gap is provided between the side wall of the screen component and the border frame portion, and the screen component and the border frame portion do not overlap, so that a narrow frame effect can be achieved. Based on this, the protective glue layer fills the protective gap, and the protective glue layer blocks the protective gap, so that entire machine protection is performed by using the protective glue layer. The protective glue layer has the high-modulus portion and the low-modulus portion, and the high-modulus portion is located on one side of the low-modulus portion facing away from the middle plate portion of the middle frame. The high-modulus portion has a high modulus and high hardness, and the low-modulus portion has a low modulus and good elasticity, so that the protective glue layer can have both a protective function and a buffering function, can prevent foreign matters from entering a display screen and protect the working performance of the display screen, and can provide buffering between the border frame portion of the middle frame and a side wall of the screen component, to prevent the screen component from being damaged.

### BRIEF DESCRIPTION OF DRAWINGS

FIG. 1 is a schematic diagram of a structure of an electronic device according to an embodiment of this application;
FIG. 2 is an exploded view of the electronic device shown in FIG. 1;
FIG. 3 is a schematic structural diagram of assembling a screen component to a middle frame in the related technology;
FIG. 4 is another schematic structural diagram of assembling a screen component to a middle frame in the related technology;
FIG. 5 is a third schematic structural diagram of assembling a screen component to a middle frame in the related technology;
FIG. 6 is a fourth schematic structural diagram of assembling a screen component to a middle frame in the related technology;
FIG. 7 is a schematic diagram of a layered structure of glue between a screen component and a border frame portion in FIG. 6(a);
FIG. 8 is a schematic structural diagram of a screen component assembled structure according to an embodiment of this application;
FIG. 9 is a schematic diagram of a structure of another screen component assembled structure according to an embodiment of this application;
FIG. 10 is a flowchart of steps of an assembling method according to an embodiment of this application;
FIG. 11 is a technological flowchart of a screen component assembled structure according to an embodiment of this application; and
FIG. 12 is a technological flowchart of another screen component assembled structure according to an embodiment of this application.

Description of reference numerals in the accompanying drawings:
1-electronic device; 10-screen component assembled structure 2-spray head; 3-light source;
100-screen component; 200-housing; 300-back adhesive layer; 400-protective glue layer; 400a-protective glue;
110-display screen; 120-protection cover plate; 130-circuit board; 210-middle frame; 220-rear cover; 410-high-modulus portion 420-low-modulus portion
110a-OLED display screen; 110b-LCD screen; 211-middle plate portion; 212-border frame portion;
2121-positioning slot;
101-screen component; 102-middle frame; 103-back adhesive layer; 104-binder layer; 105-side sealant; 106-glue;
1011a-OLED display screen; 1011b-LCD screen; 1012-cover plate; 1021-middle plate portion; 1022-border frame portion; 1022a-stepped surface; 1061-supporting glue; and 1062-caulking glue.

### DESCRIPTION OF EMBODIMENTS

Terms used in implementations in this application are merely intended to explain specific embodiments of this application rather than being intended to limit this application.

An embodiment of this application provides an electronic device. The electronic device may be a consumer electronic product. For example, the electronic device includes but is not limited to a mobile phone, a portable android device (PAD), a notebook computer (NoteBook), ultra-mobile personal computers (UMPC), a walkie talkie, a netbook, a point of sale (POS) machine, a personal digital assistant (PDA), a wearable device, a virtual reality (VR) device, an augmented reality (AR) device, and the like.

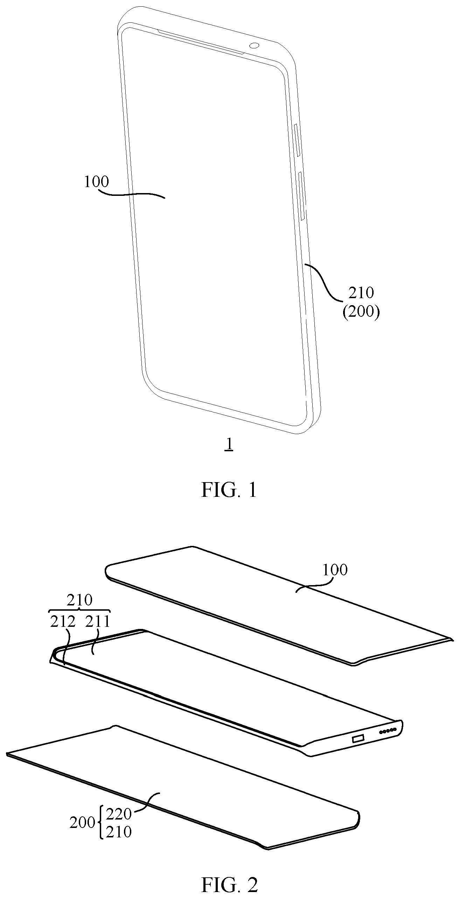

FIG. 1 is a schematic diagram of a structure of an electronic device according to an embodiment of this application. As shown in FIG. 1, the electronic device 1 being a mobile phone is taken as an example. The electronic device 1 may include a screen component 100 and a housing 200. One side surface of the screen component 100 is configured to display image information. Generally, the side surface of the screen component 100 is defined as a front surface of the screen component 100, and the other side surface opposite to the front surface of the screen component 100 is defined as a back surface of the screen component 100. The housing 200 is arranged around a peripheral side and the back surface of the screen component 100, and is configured to support and fix the screen component 100 and provide protection. The front surface of the screen component 100 is exposed out of the housing 200, for a user to view content displayed by the screen component 100 or perform a typing operation on the electronic device 1.

Generally, a side surface on which the screen component 100 is located is defined as a front surface of the electronic device 1, and the other side surface, opposite to the front surface, of the electronic device 1 is defined as a back surface of the electronic device 1. When the following describes the components of the electronic device 1, corresponding to the front surface and the back surface of the electronic device 1, a "front surface" of a component means a side surface of the component facing the front surface of the electronic device 1, and a "back surface" of the component means a side surface of the component facing the back surface of the electronic device 1.

FIG. 2 is an exploded view of the electronic device shown in FIG. 1. Referring to FIG. 2, a housing 200 of the electronic device 1 may include a middle frame 210 and a rear cover 220. The middle frame 210 is connected between the screen component 100 and the rear cover 220. The screen component 100 is supported on a front surface of the middle frame 210. The rear cover 220 is connected to a back surface of the middle frame 210. The screen component 100 is usually entirely supported on the middle frame 210, to ensure the strength and stability of the screen component 100 and meets a usage requirement of the screen component 100. The rear cover 220 is usually connected and fixed to the middle frame 210 in an overlapping manner. An accommodating space is formed between the middle frame 210 and the rear cover 220. Components such as a circuit board 130, a battery, a camera module, and a microphone are arranged in the accommodating space.

The middle frame 210 may include a middle plate portion 211 and a border frame portion 212. The middle plate portion 211 is located between the screen component 100 and the rear cover 220, and is parallel to the screen component 100 and the rear cover 220. The border frame portion 212 is arranged around a peripheral side of the middle plate portion 211. The border frame portion 212 usually extends towards two sides of the middle plate portion 211 in a direction perpendicular to a plate surface of the middle plate portion 211. The screen component 100 and the rear cover 220 may be both located in a region enclosed by the border frame portion 212. For example, the border frame portion 212 and the middle plate portion 211 may be of an integrally formed structure.

The screen component 100 is usually connected to the middle plate portion 211 in an integral fit manner. The screen component 100 is supported by the middle plate portion 211, to ensure that the screen component 100 is supported steadily and firmly, so that the screen component 100 has sufficient strength, and satisfies a usage requirement that the screen component 100 is frequently pressed. The border frame portion 212 is arranged around a peripheral side of the screen component 100, to protect an edge of the screen component 100, help the screen component 100 fight against a risk scenario such as collision and falling, and protect the screen component 100 from being damaged.

An overlapping edge is usually arranged on one side, facing the rear cover 220, of the border frame portion 212 of the middle frame 210. The rear cover 220 overlaps and is fixedly connected to the overlapping edge of the border frame portion 212. For example, the rear cover 220 may be adhered to the overlapping edge of the border frame portion 212 through a back adhesive. A clearance is usually reserved between the rear cover 220 and the middle plate portion 211 of the middle frame 210. The clearance forms the foregoing accommodating space, so that components are arranged in the accommodating space between the middle plate portion 211 of the middle frame 210 and the rear cover 220. To improve the connection strength for the rear cover 220 and the middle frame 210, in some examples, supporting structures such as a retaining wall and a supporting column are usually further arranged between the middle plate portion 211 of the middle frame 210 and the rear cover 220. These supporting structures are supported between the middle plate portion 211 and the rear cover 220, and may enhance the strength of the rear cover 220, to prevent the rear cover 220 from deforming under a force. In addition, these supporting structures may be further used as positioning structures or mounting structures of the components in the accommodating space.

The following mainly describes a structure in which the screen component 100 is assembled to the middle frame 210.

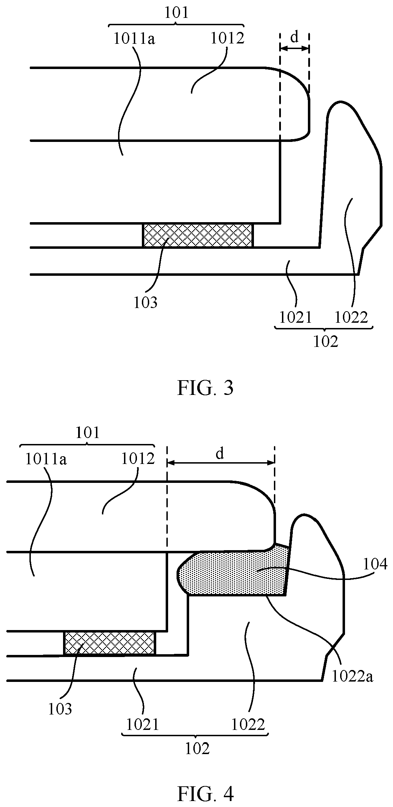

FIG. 3 is a schematic structural diagram of assembling a screen component to a middle frame in the related technology. FIG. 4 is another schematic structural diagram of assembling a screen component to a middle frame in the related technology. Referring to FIG. 3 and FIG. 4, the screen component 101 carrying an organic light-emitting diode (OLED) display screen is taken as an example for explanation. Namely, the screen component 101 may include an OLED display screen 1011a and a cover plate 1012 covering the OLED display screen 1011a.

It should be noted that a screen-to-body ratio of the screen component 101 usually depends on a width of the cover plate 1012 extending out of the OLED display screen 1011a (which is a width between the two vertical dashed lines shown in FIG. 3 and FIG. 4). In other words, a larger width of the cover plate 1012 extending out of the OLED display screen 1011a indicates a larger width of a black border frame of the screen component 101, and a wider border of the screen component 101 indicates a smaller screen-to-body ratio. A smaller width of the cover plate 1012 extending out of the OLED display screen 1011a indicates a smaller width of a black label of the screen component 101, and a narrower border of the screen component 101 indicates a larger screen-to-body ratio.

Referring to FIG. 3, in some current solutions, to achieve a narrow border frame, the screen component 101 is adhered to a middle plate portion 1021 of the middle frame 102 only through a back adhesive layer 103. The cover plate 1012 extends out of the OLED display screen 1011a by a very small width. The cover plate 1012 and a border frame portion 1022 of the middle frame 102 do not overlap. In this way, the width d of the black border frame of the screen component 101 is small, and the screen component 101 can achieve a narrow bezel effect, a large screen-to-body ratio, and a good appearance effect. In this case, a narrow gap is reserved between a side wall of the screen component 101 and the border frame portion 1022 of the middle frame 102, and the screen component 101 is protected through the gap.

However, since the gap exists between the OLED display screen 1011a and the border frame portion 1022 of the middle frame 102, the OLED display screen 1011a has a risk of swinging and poor stability. In addition, during long-term use, dust is easily accumulated in the gaps and external moisture easily enters the OLED display screen 1011a through the gap, easily causing a protection problem. For example, crushed pixels, liquid intrusion, and static electricity breakdown are caused to the OLED display screen 1011a.

Referring to FIG. 4, to make the entire machine have a good protective effect, in some other current solutions, based on the screen component 101 being adhered to the middle plate portion 1021 of the middle frame 102 through the back adhesive layer 103, a stepped surface 1022a is further arranged on the border frame portion 1022 of the middle frame 102. A portion, extending out of the OLED display screen 1011a, of the cover plate 1012 overlaps the stepped surface 1022a of the border frame portion 1022. A binder layer 104 is arranged between the cover plate 1012 and the stepped surface 1022a of the border frame portion 1022. The cover plate 1012 and the border frame portion 1022 are bonded to each other through the binder layer 104. The binder layer 104 fills the gap between the screen component 101 and the border frame portion 1022 of the middle frame 102. The entire machine is protected through the binder layer 104, so that foreign matters such as dust and moisture from the outside can be prevented from entering the OLED display screen 1011a. Therefore, the entire machine has high reliability.

Since the cover plate 1012 needs to overlap the stepped surface 1022a of the border frame portion 1022, the cover plate 1012 extends out of the OLED display screen 1011a by a large width, to ensure that there is a sufficient overlapping area between the cover plate 1012 and the stepped surface 1022a of the border frame portion 1022. However, this increases the width of the black border frame of the screen component 101, and the width d of the black border of the screen component 101 is relatively large. Therefore, the narrow bezel effect cannot be achieved on the screen component 101, and the screen component 101 has a small screen-to-body ratio and poor appearance effect.

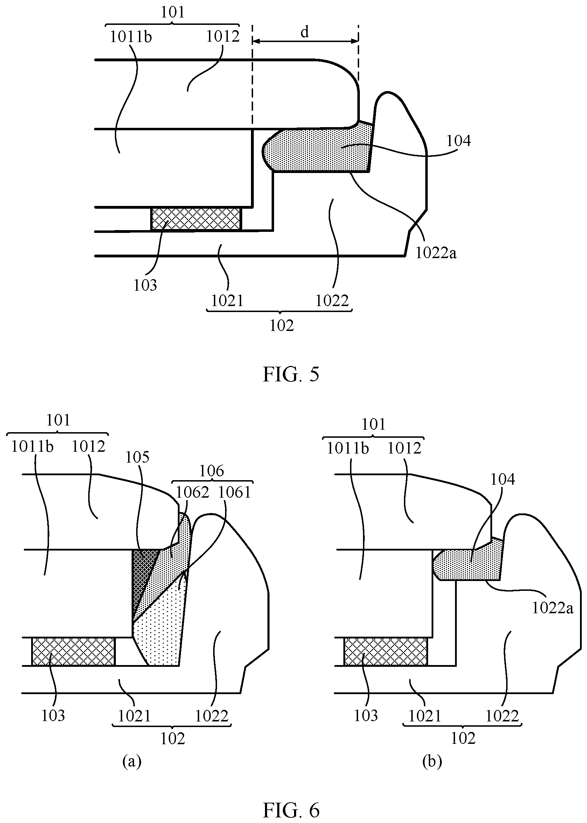

FIG. 5 is a third schematic structural diagram of assembling a screen component to a middle frame in the related technology. FIG. 6 is a fourth schematic structural diagram of assembling a screen component to a middle frame in the related technology. Referring to FIG. 5 and FIG. 6, the screen component 101 carrying a liquid crystal display (LCD) screen is taken as an example for explanation. Namely, the screen component 101 may include an LCD screen 1011b and a cover plate 1012 covering the LCD screen 1011b.

Referring to FIG. 5, similar to the screen component 101 carrying the OLED display screen 1011a, to make the entire machine have a good protective effect, in some current solutions, for the screen component 101 carrying the LCD screen 1011b, based on the screen component 101 being adhered to the middle plate portion 1021 of the middle frame 102 through the back adhesive layer 103, a ringlike stepped surface 1022a surrounding the border frame portion 1022 by a circle may be arranged on the border frame portion 1022 of the middle frame 102. Side edges of the cover plate 1012 overlap the stepped surface 1022a of the border frame portion 1022. The cover plate 1012 is connected to the stepped surface 1022a of the border frame portion 1022 through the binder layer 104, and the entire machine is protected through the binder layer 104. However, in this way, the cover plate 1012 extends out of the LCD screen 1011b by a large width, and the width of the black border frame d of the screen component 101 is large, so that a narrow bezel effect cannot be achieved on the screen component 101.

Referring to FIG. 6(a) and FIG. 6(b), to enhance the appearance effect of the screen component 101, in some other implementations, based on the screen component 101 being adhered to the middle plate portion 1021 of the middle frame 102 through the back adhesive layer 103, narrow bezel connection is used for at least some of the side edges of the screen component 101. Referring to FIG. 6(a), some of the side edges of the screen component 101 include, for example, a top side (which is usually a side with a sound outlet gap) of the screen component 101 and a left side and a right side which are respectively located on two sides of the top side, the cover plate 1012 extends out of the LCD screen 1011b by a small width, and the cover plate 1012 does not overlap the border frame portion 1022 of the middle frame 102, to achieve the narrow bezel effect on the corresponding side edges of the screen component 101. Referring to FIG. 6(b), another side edge of the screen component 101, such as a bottom edge of the screen component 101, still uses a mode for making the cover plate 1012 overlap the stepped surface 1022a of the border frame portion 1022 and is adhered to the border frame portion 1022 through the binder layer 104.

It should be noted that a difference between the LCD screen 1011b and the OLED display screen 1011a is that the LCD screen 1011b is of a liquid crystal box forming structure, and includes two substrates and liquid crystal particles sandwiched between the two substrates. Therefore, the LCD screen 1011b has a high requirement for encapsulation. The LCD screen 1011b is provided with a frame sealant between the two substrates. In some cases, for example, as shown in FIG. 6(a), a lateral sealant 105 may be further arranged on a portion of the side wall of the LCD screen 1011b. The side wall of the LCD screen 1011b is sealed by using the lateral sealant 105, to prevent liquid leakage from the LCD screen 1011b. In addition, to ensure the sealing property of the LCD screen 1011b, these side edges of the screen component 101 that do not overlap the border frame portion 1022 usually need to be sealed by filling a gap between the screen component 101 and the border frame portion 1022 with glue 106. Low-modulus supporting glue 1061 may first fill the gap. The supporting glue 1061 achieves a supporting function and a buffering function. Then, caulking glue 1062 fills the supporting glue 1061. The caulking glue 1062 achieves an appearance protective function.

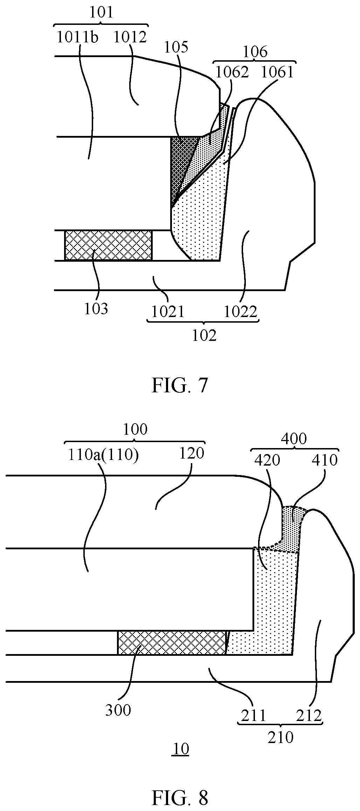

However, in a case that sides of the screen component 101 use different connection modes, a bottom edge of the cover plate 1012 overlapping the stepped surface 1022a on the border frame portion 1022 and the glue 106 filling a space between the remaining side edges of the screen component 101 and the border frame portion 1022 are taken as an example. The width of the black border frame of the screen component 101 is large, and the widths of the black border frames of the remaining side edges are small, causing a large difference in the widths of the black border frames on the four side edges of the screen component 101, which affects the appearance effect of the electronic device 1. In addition, referring to FIG. 7, FIG. 7 shows a layered structure of glue between the screen component and the border frame portion in FIG. 6(a). When the space between the screen component 101 and the border frame portion 1022 of the middle frame 102 is filled with glue 106, the supporting glue 1061 easily spills out to an appearance surface of the screen component 101. In this case, a layering defect exists between the supporting glue 1061 and the caulking glue 1062 that has a modulus different from that of the supporting glue 1061. A gap exists between demarcation surfaces of the supporting glue 1061 and the caulking glue 1062. As a result, the electronic device 1 easily has problems such as wrinkling, liquid intrusion, and static electricity breakdown.

In view of this, the embodiments of this application improve an assembled structure between the screen component 100 and the middle frame 210. For ease of description, in this embodiment, an entire structure in which the screen component 100 is assembled to the middle frame 210 is defined as an assembled structure of the screen component 100. In the assembled structure for the screen component 100 in this embodiment, a protective glue layer 400 is arranged in a protective gap between the screen component 100 and the border frame portion 1022 of the middle frame 210. Based on a narrow bezel, the entire machine is protected by using the protective glue layer 400. The protective glue layer 400 can have both an appearance caulking function and a buffering function, to enhance the protective effect on the entire machine.

The assembled structure of the screen component 100 provided in this embodiment of this application will be described below.

FIG. 8 is a schematic structural diagram of a screen component assembled structure according to an embodiment of this application. Referring to FIG. 8, in this embodiment, a screen component 100 is adhered to a middle plate portion 211 of a middle frame 210 through a back adhesive layer 300. An adhesive material forming the back adhesive layer 300 is, for example, a pressure-sensitive adhesive. For example, the material forming the back adhesive layer 300 may include acrylic resin, organic silicon resin, organic silicon rubber, a polyurethane resin, and the like. For the back adhesive layer 300 applied to an electronic device 1, the back adhesive layer 300 may have characteristics of high-temperature resistance and aging resistance, to meet a long-term usage requirement for an electronic product.

The screen component 100 includes a display screen 110 and a protection cover plate 120 which are arranged in a stacked manner. The display screen 110 is located on one side of the screen component 100 close to the middle plate portion 211 of the middle frame 210. A front surface of the display screen 110 is configured to display image information, and a back surface of the display screen 110 is adhered to the middle plate portion 211 through the back adhesive layer 300. The protection cover plate 120 is located on one side of the display screen 110 facing away from the middle plate portion 211. The protection cover plate 120 is covered at the front surface of the display screen 110. The protection cover plate 120 is configured to protect the display screen 110, to prevent the display screen 110 from being scratched, collided, or the like, and ensure normal operation of the display screen 110. In addition, the protection cover plate 120 is usually made of a transparent material with high strength. Based on ensuring that the protection cover plate 120 has sufficient strength to protect the display screen 110, the protection cover plate 120 is prevented from affecting a display effect of the display screen 110. For example, the protection cover plate 120 may be a glass cover or a polyethylene terephthalate (PET) cover.

For example, the protection cover plate 120 may be connected to the display screen 110 through an optical clear adhesive (OCA). In other words, an optical adhesive layer (not shown) may be arranged between the protection cover plate 120 and the display screen 110. The optical adhesive layer has high transparency, a light transmission rate that can reach 99% or above, and high adhesion, has characteristics of high-temperature resistance and ultraviolet resistance, and can ensure a secure connection between the protection cover plate 120 and the display screen 110. In addition, the optical adhesive layer can further increase brightness and contrast of the display screen 110, thereby enhancing the display effect of the screen component 100.

In addition, in this embodiment, one end, extending towards a side of the protection cover plate 120, of the border frame portion 212 of the middle frame 210 is defined as a front end surface of the border frame portion 212. FIG. 8 shows a connection structure between the screen component 100 and the middle frame 210, and does not show a cooperation structure between the middle frame 210 and the rear cover 220. It should be understood that in actual application, the border frame portion 212 of the middle frame 210 may further have a portion extending towards one side of the rear cover 220. One end, extending towards a side of the rear cover 220, of the border frame portion 212 is a rear end surface of the border frame portion 212.

To achieve a narrow bezel effect of the electronic device 1, in this embodiment, the screen component 100 and the border frame portion 212 of the middle frame 210 do not overlap, and a protective gap (not shown) exists between a side wall of the screen component 100 and the border frame portion 212. On the one hand, the protective gap provides an assembling gap for the screen component 100 and the middle frame 210, so that an area of a region surrounded by the border frame portion 212 of the middle frame 210 is slightly larger than an area of the screen component 100, and the screen component 100 can be smoothly mounted on the middle plate portion 211 of the middle frame 210. On the other hand, the protective gap provides basic protection for the screen component 100, to avoid the border frame portion 212 of the middle frame 210 from being in direct contact with the side wall of the screen component 100, so as to prevent hard contact between the border frame portion 212 and the screen component 100 from damaging the screen component 100. For example, the screen component 100 can be prevented from being abraded or from having partial crushed pixels.

Still referring to FIG. 8, for a structure in which the protective gap is formed between the screen component 100 and the border frame, since the protection cover plate 120 does not need to overlap and be adhered to the border frame portion 212 of the middle frame 210, based on ensuring that the protection cover plate 120 can fully cover the display screen 110 and can fully protect the display screen 110, a width of the protection cover plate 120 extending out of the display screen 110 (a side of the display screen 110) may be small, and a width of a black border frame of the screen component 100 is small, so that the screen component 100 has a narrow bezel and a large screen-to-body ratio, which can meet a narrow bezel requirement of the electronic device 1 and enhance the appearance effect of the electronic device 1.

Based on narrow gap protection in the form of a protective gap between the screen component 100 and the border frame portion 212 of the middle frame 210, in this embodiment, the protective gap between the side wall of the screen component 100 and the border frame portion 212 is further filled with the protective glue layer 400. The protective gap is sealed through the protective glue layer 400, and the electronic device 1 is protected by using the protective glue layer 400, to prevent foreign matters such as external dust, moisture, and grease from entering the display screen 110 from the protective gap, protect the working performance of the display screen 110, and prevent the display screen 110 from having the problems such as liquid intrusion and static electricity breakdown.

In some implementations, the protective glue layer 400 may extend from the front end surface of the border frame portion 212 of the middle frame 210 towards the middle plate portion 211. Namely, a top end (one end of the protective glue layer 400 facing the appearance surface of the screen component 100) of the protective glue layer 400 may be approximately flush with the front end surface of the border frame portion 212. In actual application, the protective glue layer 400 is usually formed by applying protective glue in a fluid state into the protective gap and then curing the protective glue. The formation of the protective glue layer 400 is facilitated by making the top end of the protective glue layer 400 flush with the front end surface of the border frame portion 212, and the border frame portion 212 has a good protective function on the protective glue layer 400.

During the glue application, after the protective glue in the fluid state is applied into the protective gap, the protective glue that spills out of the front end surface of the border frame portion 212 is wiped away by using the front end surface of the border frame portion 212 as a boundary plane, so that the protective glue in the protective gap is reserved and supported by the border frame portion 212, thereby facilitating the curing and formation of the protective glue. In addition, after the protective glue is cured and formed, no portion will be exposed above the border frame portion 212, and the protective glue layer 400 is almost entirely located in a shield region of the border frame portion 212. The border frame portion 212 can protect the protective glue layer 400 from being scraped or abraded, which helps protect the integrity of the protective glue layer 400. The protective glue layer 400 has good stability, and the service life of the protective glue layer 400 can be prolonged.

The protective glue layer 400 may be divided into a high-modulus portion 410 and a low-modulus portion 420 in a thickness direction of the screen component 100. The high-modulus portion 410 is close to a front surface of the screen component 100, and the low-modulus portion 420 is located on one side of the high-modulus portion 410 facing the middle plate portion 211. Namely, the high-modulus portion 410 is located on one side of the low-modulus portion 420 facing away from the middle plate portion 211. The high-modulus portion 410 has a high modulus and high hardness, and the low-modulus portion 420 has a low modulus and good elasticity, so that through the high-modulus portion 410 and the low-modulus portion 420, the protective glue layer 400 can have both a protective function and a buffering function, can prevent foreign matters from entering the display screen 110 and protect the working performance of the display screen 110, and can provide buffering between the border frame portion 212 of the middle frame 210 and the side wall of the screen component 100, to prevent the screen component 100 from being damaged.

The high-modulus portion 410 extends from one side on which the front surface of the screen component 100 is located towards the middle plate portion 211 of the middle frame 210. Namely, the high-modulus portion 410 is located on one side on which the appearance face of the screen component 100 is located. The high-modulus portion 410 extends from a side of the protection cover plate 120 towards a side of the display screen 110. The high-modulus portion 410 has the high modulus and the high hardness, which can achieve a good adhesion function. The high-modulus portion 410 enables the protective glue layer 400 to stably block the protective gap for long time, to prevent the foreign matters such as external dust, moisture, and grease from entering the display screen 110, thereby protecting the working performance of the display screen 110. The protective glue layer 400 achieves a whole-machine protective effect mainly by using the high-modulus portion 410, which can ensure that the protective glue layer 400 is not abraded or scratched. During long-term use, especially in a risk scenario such as collision or falling, the high-modulus portion 410 can further ensure that no bad phenomenon such as deformation or cracking occurs in the protective glue layer 400, thereby ensuring that the protective glue layer 400 maintains a long-term and effective whole-machine protective effect, and prolonging the service life of the protective glue layer 400.

The low-modulus portion 420 is located between the high-modulus portion 410 and the middle plate portion 211 of the middle frame 210. The low-modulus portion 420 has a low modulus, low hardness, and good elasticity, so that the low-modulus portion 420 can have elastic deformation. An expansion coefficient of the low-modulus portion 420 provides a stability guarantee for filling the protective gap with the protective glue layer 400, and provides a supporting basis for the high-modulus portion 410. The low-modulus portion 420 is mainly arranged in a manner of corresponding to a region on which a side of the display screen 110 is located. When the low-modulus portion 420 fills the gap between the side of the display screen 110 and the border frame portion 212, the elasticity of the low-modulus portion 420 may achieve a good buffering function, thus avoiding hard contact between the border frame portion 212 and the display screen 110, and protecting the display screen 110 from being damaged. Especially in a risk scenario such as collision or falling, the low-modulus portion 420 may absorb an impact force, to prevent the display screen 110 from having defects such as abrasion, crushed pixels, and gaps.

In addition, although the protective glue layer 400 has the high-modulus portion 410 and the low-modulus portion 420, the protective glue layer 400 is still an integrated glue layer. Compared with the foregoing two kinds of glue: the supporting glue 1061 and the caulking glue 1062 which fill the space between the screen component 100 and the border frame portion 212 of the middle frame 210, the protective glue layer 400 of this embodiment has good integrity and has no phenomenon of layering; there is no gap at a layered boundary plane and phenomena such as creases on the appearance, liquid intrusion, and static electricity breakdown are avoided.

According to an extension depth of the high-modulus portion 410 of the protective glue layer 400, both the high-modulus portion 410 and the low-modulus portion 420 are provided in a thickness region at which a side of the display screen 110 is located. In other words, a bottom side of the high-modulus portion 410 extending towards the middle plate portion 211 of the middle frame 210 is higher than a plane at which a back surface (a side surface of the protection cover plate 120 facing the display screen 110) of the protection cover plate 120 is located. Or, only the low-modulus portion 420 may exist in a thickness region at which a side of the display screen 110 is located. In other words, a bottom side of the high-modulus portion 410 extending towards the middle plate portion 211 of the middle frame 210 is lower than a plane at which a front surface (a side surface of the display screen 110 facing the cover plate) of the display screen 110 is located. In conclusion, in the thickness region at which the side of the display screen 110 is located, at least a portion of the thickness region is covered by the low-modulus portion 420, so that the display screen 110 is protected from being damaged through the buffering function of the low-modulus portion 420.

Referring to FIG. 8, by controlling an extension depth of the high-modulus portion 410 of the protective glue layer 400, a side end of the front surface of the display screen 110 is located in a range covered by the low-modulus portion 420. In other words, one end of the side wall of the display screen 110 facing the protection cover plate 120 is located in the range covered by the low-modulus portion 420. In this way, only the low-modulus portion 420 exists in the thickness region a which the side of the display screen 110 is located. First, for the protective gap, the gap between the side wall of the display screen 110 and the border frame portion 212 of the middle frame 210 is slightly wider than the gap between the protection cover plate 120 and the border frame portion 212, so that a larger range of the low-modulus portion 420 covering the thickness region at which the side of the display screen 110 is located indicates that it is easier for the protective glue layer 400 to fill the gap between the display screen 110 and the border frame portion 212. In addition, only the low-modulus portion 420 exists in the thickness region at which the side of the display screen 110 is located, so that a buffering region of the side of the display screen 110 is maximized, and the protective glue layer 400 has a better impact force absorption effect and has a better protective effect on the display screen 110.

For example, the bottom side of the high-modulus portion 410 of the protective glue layer 400 may be controlled to be approximately located at a boundary plane between the protection cover plate 120 and the display screen 110. Namely, in the protective glue layer 400, the high-modulus portion 410 and the low-modulus portion 420 are approximately bounded by the boundary plane between the protection cover plate 120 and the display screen 110. For the protective glue layer 400 extending from the top end of the border frame portion 212 towards the middle plate portion 211, it can be ensured that the high-modulus portion 410 has a sufficient extension depth, and can meet an adhesion strength requirement and a protection need of the protective glue layer 400; and the low-modulus portion 420 maximally covers the side wall of the display screen 110, thereby ensuring a caulking effect of the protective glue layer 400 and ensuring the buffering and protective functions on the display screen 110. It should be understood that the protective glue layer 400 is an integrated glue layer, and the boundary plane here is not a layered boundary plane that can be observed by naked eyes.

For example, by controlling a curing parameter of the protective glue layer 400, a depth range of the high-modulus portion 410 of the protective glue layer 400 may be controlled to be between 0.4 mm and 0.6 mm. In this way, the protective glue layer 400 can have the high-modulus portion 410 with a sufficient depth. The protective glue layer 400 has high adhesion strength, which can meet a need for the connection strength for the screen component 100 and the border frame portion 212 of the middle frame 210, and can have an effective protective function to prevent foreign matters such as dust, moisture, and grease in an external environment from entering the display screen 110. In addition, a region of the protective glue layer 400 below the high-modulus portion 410 is also sufficiently deep to form the low-modulus portion 420, so as to meet a caulking requirement and provide good buffering and protection for the display screen 110.

For example, the depth of the high-modulus portion 410 of the protective glue layer 400 may be 0.42 mm, 0.44 mm, 0.46 mm, 0.48 mm, 0.50 mm, 0.52 mm, 0.54 mm, 0.56 mm, 0.58 mm, and the like.

Regarding setting of a modulus of the protective glue layer 400, a modulus range of the high-modulus portion 410 of the protective glue layer 400 may be 40 Mpa to 70 Mpa, so that the high-modulus portion 410 has high hardness. The high-modulus portion 410 enables the protective glue layer 400 to have sufficient adhesion strength, to tightly and securely connect the screen component 100 to the border frame portion 212 of the middle frame 210, thereby achieving a good protective effect. For example, the modulus of the high-modulus portion 410 of the protective glue layer 400 may be 45 Mpa, 50 Mpa, 55 Mpa, 60 Mpa, 65 Mpa, and the like.

A modulus range of the low-modulus portion 420 of the protective glue layer 400 may be 5 Mpa to 35 Mpa, so that the low-modulus portion 420 has sufficient elastic deformation performance. The low-modulus portion 420 may achieve complete caulking, so that the protective glue layer 400 has a good buffering function, to absorb an impact force from the border frame portion 212 of the middle frame 210 to the display screen 110, and protect the display screen 110 from being damaged. For example, the modulus range of the low-modulus portion 420 of the protective glue layer 400 may be 5 Mpa to 25 Mpa. For example, the modulus of the low-modulus portion 420 may be 8 Mpa, 10 Mpa, 12 Mpa, 15 Mpa, 18 Mpa, 20 Mpa, 22 Mpa, and the like.

In addition, the protective glue that forms the protective glue layer 400 may have a viscosity of 20000 cps to 100000 cps, to make the protective glue have sufficient stability. After the glue application, the protective glue may be stably adhered to the border frame portion 212 of the middle frame 210, thereby ensuring that the protective glue layer 400 can tightly and securely connect the screen component 100 to the border frame portion 212. For example, the viscosity of the protective glue layer 400 may be 30000 cps, 40000 cps, 50000 cps, 60000 cps, 70000 cps, 80000 cps, 90000 cps, and the like.

A thixotropy value of the protective glue that forms the protective glue layer 400 may be greater than 2. It should be noted that, the thixotropy of the protective glue is a characteristic that a shear stress of the protective glue 400a decreases over time under the action of a shear rate. Specifically, the viscosity of the protective glue rapidly decreases when the protective glue is stirred, thereby facilitating application. When the stirring is stopped, the viscosity of the protective glue increases immediately, so that the protective glue will not flow randomly. The thixotropy value of the protective glue that forms the protective glue layer 400 is greater than 2, so that the protective glue can be smoothly applied to the border frame portion 212 of the middle frame 210 under an external force. After the application is completed, the protective glue can stably stay on the border frame portion 212.

A breaking elongation of the cured protective glue layer 400 may be greater than 300%, so that the protective glue layer 400 has good flexibility based on its sufficient adhesion strength. Even in a risk scenario such as collision or falling, the protective glue layer 400 may not easily break and layer, so that the protective glue layer 400 can maintain good protective performance for a long time.

Regarding how to form the protective glue layer 400 having the high-modulus portion 410 and the low-modulus portion 420, in this embodiment, the protective glue layer 400 may be a glue layer cured and formed jointly using a first curing mode and a second curing mode. The protective glue layer 400 is cured and formed using two different curing modes, so that the protective glue layer 400 has the high-modulus portion 410 and the low-modulus portion 420 having the modulus different from that of the high-modulus portion 410, so that the protective glue layer 400 has both an adhesion and fixing function and a buffering function.

In some implementations, main resin of the protective glue that forms the protective glue layer 400 may be composed of a light-cured resin and a moisture-cured resin. In other words, the protective glue layer 400 may be jointly cured and formed using a light curing mode and a moisture curing mode. In this case, the foregoing first curing mode may be the light curing mode, and the light curing mode is, for example, an ultraviolet rays (UV) light curing mode. The foregoing second curing mode may be the moisture curing mode. As the name implies, the moisture curing means that the protective glue is cured by reacting with moisture (water modules) in air.

For example, after the application of the protective glue into the protective gap is completed, a light source (e.g. a UV light source) is arranged on one side of the protective glue facing the protection cover plate 120. The protective glue is irradiated using the light source 3, so that a portion of the protective glue close to the protection cover plate 120 undergoes light curing and moisture curing together to form the high-modulus portion 410. Since a portion of the protective glue close to the middle plate portion 211 of the middle frame 210 is far from the light source, this portion undergoes only the moisture curing to form the low-modulus portion 420.

For example, compositions of the protective glue that forms the protective glue layer 400 may include: a UV moisture dual-cured resin (in a mass percentage of 10 to 50%), a UV moisture dual-cured monomer (in a mass percentage of 5 to 40%), a polyurethane prepolymer (in a mass percentage 2 to 10%), a photoinitiator (in a mass percentage of 0.5 to 5%), a silane coupling agent (in a mass percentage of 0.5 to 5%), a moisture curing catalyst (in a mass percentage of 0.5 to 5%), a rheology modifier (in a mass percentage of 0.5 to 5%), a pigment (in a mass percentage of 0.5 to 5%), and the like.

The UV moisture dual-cured resin may be resin containing an isocyanate group and a free-radical polymerizable group. The UV moisture dual-cured monomer may be a monomer compound or mixture containing an isocyanate group and a free-radical polymerizable group. The polyurethane prepolymer may be a compound using an end group of polyol reacting with an isocyanate curing agent as an isocyanate group. The photoinitiator may include at least one of a benzophenone compound, an acetophenone compound, an acylphosphine oxide compound, a ferrocene compound, an oxime ester compound, a benzoin ether compound, and a thioketone compound. The silane coupling agent may include at least one of an amino coupling agent containing methoxy silane or ethoxy silicon capable of hydrolyzing a functional group, an epoxy silane coupling agent, a thiol silane coupling agent, and the like. The moisture curing catalyst may include at least one of an organotin compound, an alpha silane coupling agent, and a titanate ester compound. The rheology modifier may include at least one of silicon dioxide, calcium carbonate, and barium sulfate. The pigment may be a black pigment, which may include at least one of carbon black, carbon nanotubes, and graphene.

Still referring to FIG. 8, an explanation is made by using an example in which the display screen 110 mounted on the screen component 100 is an OLED display screen 110. The back surface of the OLED display screen 110 is adhered to the middle plate portion 211 of the middle frame 210 through the back adhesive layer 300. The protection cover plate 120 extends out of the side edge of the OLED display screen 110 by a small width. The protective glue layer 400 fills the protective gap formed between the protection cover plate 120 and the border frame portion 212 of the middle frame 210, as well as the protective gap between the OLED display screen 110 and the border frame portion 212 of the middle frame 210. The protective glue layer 400 has an appearance caulking function, so that the screen component 100 has a narrow bezel effect. In addition, the buffering function of the protective glue layer 400 can protect the OLED display screen 110 from being damaged.

Usually, a ground layer (not shown) is arranged on one side of the OLED display screen 110 facing the middle plate portion 211 of the middle frame 210. A material that forms the ground layer is, for example, a copper foil. The ground layer may achieve an electromagnetic shielding function and an anti-static function, to improve the working performance of the electronic device 1. For the assembled structure 10 of the screen component 100 carrying the OLED display screen 110, referring to FIG. 8, in this embodiment, the protective glue layer 400 between the screen component 100 and the border frame portion 212 of the middle frame 210 may extend to the back surface of the OLED display screen 110 and be in contact with a surface of the ground layer on the back surface of the OLED display screen 110.

According to the characteristic of the glue material that forms the protective glue layer 400, the protective glue layer 400 usually has a conduction property. By enabling the protective glue layer 400 to extend to the back surface of the OLED display screen 110 and be in contact with the ground layer, and connecting the protective glue layer 400 between the protection cover plate 120 and the ground layer, static charges attached to a surface of the protection cover plate 120 can be transferred to the ground layer, thereby eliminating harms of the static charges to the screen component 100.

The OLED display screen 110 usually drives a pixel circuit by using a thin film transistor. The thin film transistor is, for example, a low temperature poly-silicon (LTPS) thin film transistor. Static electricity causes an increase in a leakage current of the thin film transistor, resulting in problems such as failure to turn off a pixel and insufficient charging time. Specifically, in terms of displaying, a green screen (since the leakage current of the thin film transistor increases, green pixels with the lowest turn-on voltage are normally on), non-uniform brightness, screen flicker, and the like may occur. Namely, in this embodiment, the protection cover plate 120 is connected to the ground layer of the OLED display screen 110 through the protective glue layer 400, which can eliminate the static charges and solve the problems such as the green screen, the non-uniform brightness, and screen flicker.

During the formation of the protective glue layer 400, by controlling a glue application amount, after the screen component 100 is mounted to the middle frame 210, the protective glue layer 400 extends to be connected to an end surface of the back adhesive layer 300 under the pressing action of the screen component 100. On the one hand, it can be ensured that the protective glue layer 400 fully fills the protective gap between the screen component 100 and the border frame portion 212 of the middle frame 210, thereby ensuring that the protective glue layer 400 has good protective and buffering functions. On the other hand, in actual application, a distance usually exists between an edge of the back adhesive layer 300 and an edge of the OLED display screen 110. By connecting the protective glue layer 400 to the back adhesive layer 300, it can be ensured that the protective glue layer 400 extends to the back surface of the OLED display screen 110 to make the protective glue layer 400 in stable contact with the ground layer on the back surface of the OLED display screen 110.

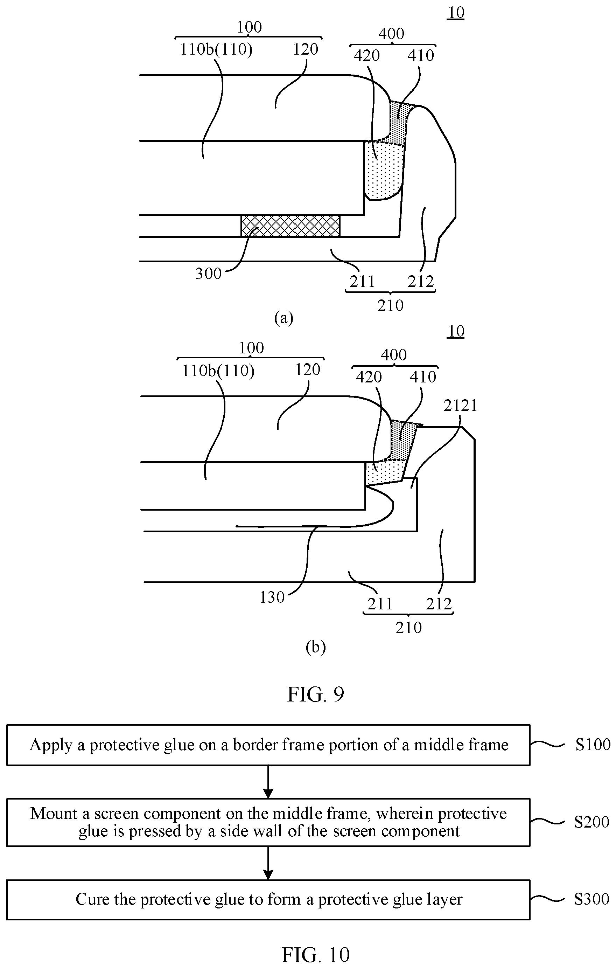

FIG. 9 is a schematic diagram of a structure of another screen component assembled structure according to an embodiment of this application. Referring to FIG. 9, an explanation is made by using an example in which the display screen 110 mounted on the screen component 100 is an LCD screen 110b. Similar to the foregoing OLED display screen 110, the back surface of the LCD screen 110b is adhered to the middle plate portion 211 of the middle frame 210 through the back adhesive layer 300. The protection cover plate 120 extends out of the side edge of the LCD screen 110b by a small width. The protective glue layer 400 fills the protective gap formed between the protection cover plate 120 and the border frame portion 212 of the middle frame 210, as well as the protective gap between the LCD screen 110b and the border frame portion 212 of the middle frame 210. The protective glue layer 400 has an appearance caulking function, so that the screen component 100 has a narrow bezel effect. In addition, the buffering function of the protective glue layer 400 can protect the LCD screen 110b from being damaged.

According to a characteristic of the LCD screen 110b, referring to FIG. 9(a), a structure in which several sides (such as a top side, a left side, and a right side) of the screen component 100 carrying the LCD screen 110b is similar to the structure of the screen component 100 carrying the OLED display screen 110. For the several sides of the screen component 100, the protective glue layer 400 fills the gap between the side wall of the screen component 100 and the border frame portion 212 of the middle frame 210. Since the ground layer of the OLED display screen 110 does not exist on the side on which the back surface of the LCD screen 110b is located, by controlling a glue application amount, the protective glue layer 400 may extend to the back surface of the LCD screen 110b. Alternatively, as shown in FIG. 9(a), the protective glue layer 400 may only fill a protective gap. There may be a clearance between the protective glue layer 400 and the middle plate portion 211 of the middle frame 210.

Referring to FIG. 9(b), FIG. 9(b) shows a situation in which a circuit board 130 is arranged on a side edge of the LCD screen 110b. In some implementations, the circuit board 130 may be a circuit board 130 that drives a thin film transistor of the LCD screen 110b to work. In some other implementations, the circuit board 130 may be a circuit board 130 that delivers a current to a backlight (not shown). It should be noted that what is different from the OLED display screen 110 is that the LCD screen 110b needs to be configured with the backlight to provide illumination for the LCD screen 110b. The backlight may be arranged on a side (one side or two sides) of the LCD screen 110b. For example, the backlight may be arranged on a bottom side of the LCD screen 110b. The backlight, for example, may be an LED arranged on the circuit board 130.

Regardless of the circuit board 130 for driving the thin film transistor to work or the circuit board 130 for delivering a current to the backlight, for example, the circuit board 130 may be a flexible printed circuit board 130 (FPC) shown in the figure, or the circuit board 130 may be a printed circuit board (PCB 130). For example, the circuit board 130 may be mounted on an inner side wall (a side wall surface of the border frame portion 212 facing the middle plate portion 211) of the border frame portion 212 of the middle frame 210. For example, a positioning slot 2121 is provided in the inner side wall of the border frame portion 212 of the middle frame 210 shown in the figure, and the positioning slot 2121 may be configured to accommodate and position the circuit board 130.

Since the circuit board 130 occupies a space of the protective gap, the protective glue layer 400 filling the protective gap may be supported at the circuit board 130. The protective glue layer 400 may extend downwards from a position that is approximately flush with the front end surface of the border frame portion 212 to be supported at the circuit board 130. The protective glue layer 400 may cover a space on a side of the protection cover plate 120 and a portion of a space on a side of the LCD screen 110b.

An embodiment of this application further provides an assembling method for a screen component 100 (hereinafter referred to as assembling method). The assembling method is used for assembling the foregoing assembled structure 10 of the screen component 100. The assembling method will be described in detail below.

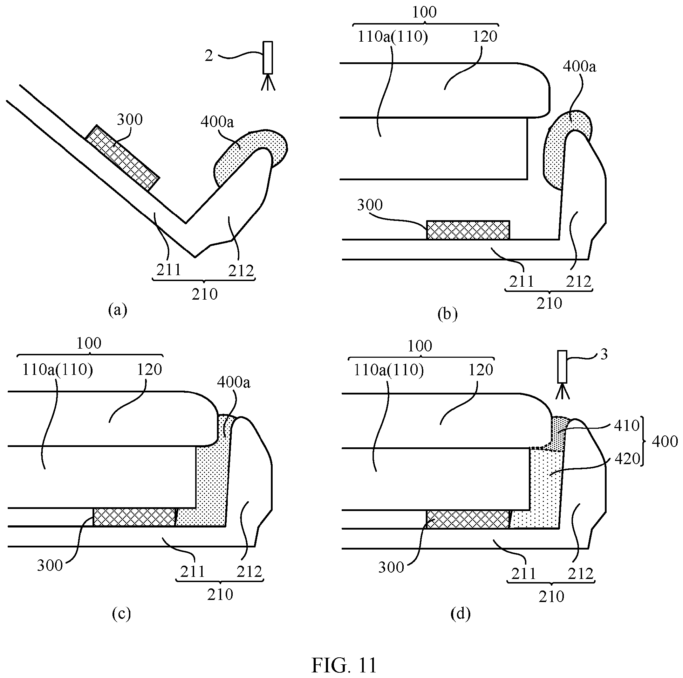

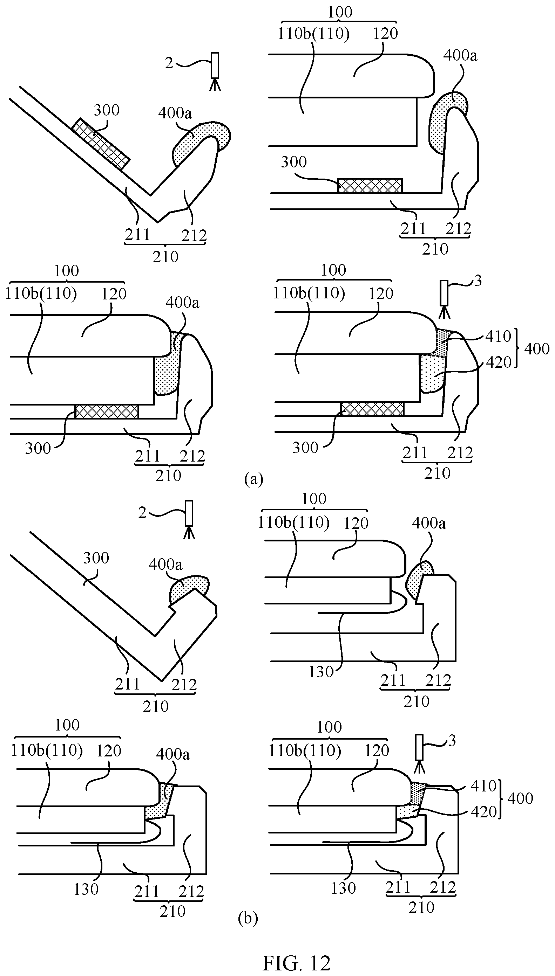

FIG. 10 is a flowchart of steps of an assembling method according to an embodiment of this application. FIG. 11 is a technological flowchart of a screen component assembled structure according to an embodiment of this application. FIG. 12 is a technological flowchart of another screen component assembled structure according to an embodiment of this application.

Referring to FIG. 10, the assembling method includes the following steps:
S100: Apply a protective glue on a border frame portion of a middle frame.

FIG. 11 shows state structures at different stages in a process of assembling a screen component 100 to a middle frame 210 by using an example in which the screen component 100 carries an OLED display screen 110a. Referring to FIG. 11(a), first, protective glue 400a in a fluid is applied to a border frame portion 212 of a middle frame 210, so that the protective glue 400a mainly covers a front end surface and an inner side wall (a side wall surface of the border frame portion 212 facing a middle plate portion 211) of the border frame portion 212.

Since the protective glue 400a in the fluid state has fluidity, to ensure that a formed protective glue layer 400 can fully fill a protective gap between the screen component 100 and the border frame portion 212 of the middle frame 210, the applied protective glue 400a in the fluid state needs to stably cover the border frame portion 212 of the middle frame 210. In view of this, in this embodiment, the middle frame 210 can be obliquely placed at a preset angle. Dispensing the glue is taken as an example. A spray head 2 for spraying the protective glue 400a may be located above the border frame portion 212 of the middle frame 210, so that the inner side wall of the border frame portion 212 tilts to a spraying direction of the protective glue 400a. In this way, an area of the inner side wall of the border frame portion 212 for receiving the protective glue 400a is larger. The inner side wall of the inclined border frame portion 212 can prevent the protective glue 400a from flowing along a surface of the border frame portion 212, and can stabilize the protective glue 400a on the inner side wall of the border frame portion 212. In addition, a front end surface of the border frame portion 212 is also covered with a protective glue 400a with a sufficient thickness, so that the protective glue 400a can stably cover the border frame portion 212.

The foregoing preset angle, namely, a tilting angle of the middle frame 210, may be between 0° and 45°. In other words, an angle between the middle plate portion 211 of the middle frame 210 and a horizontal plane may be between 0° and 45°. For example, the angle between the middle plate portion 211 of the middle frame 210 and the horizontal plane may be 5°, 10°, 15°, 20°, 25°, 30°, 35°, 40°, and the like.

For example, the protective glue 400a may be applied by using a five-axis glue dispensing machine. In addition to three linear axes X, Y, and Z, the five-axis glue dispensing machine further includes two rotation axes. The five-axis glue dispensing machine can complete a spatial curve trajectory, and can nearly ensure approaching a workpiece in any angle. Compared with conventional vertically downward glue dispensing/application, the glue application process of the five-axis glue dispensing machine is more compact and firmer, and can be used for glue application to narrow regions to avoid collisions. In addition, a tilting angle of the spray head 2 can be adjusted in real time, which can meet requirements for glue dispensing/application of different regions and in different shapes on the workpiece, can further reduce manual intervention, and has a high automation degree.

S200: Mount the screen component on the middle frame, wherein the protective glue is pressed by a side wall of the screen component.

Referring to FIG. 11(b), after the protective glue 400a in the fluid state is applied to the border frame portion 212 of the middle frame 210, the screen component 100 is mounted on the middle frame 210. The middle plate portion 211 of the middle frame 210 (or the screen component 100) is pre-applied with a back adhesive layer 300. The screen component 100 is adhered to the middle plate portion 211 of the middle frame 210 through the back adhesive layer 300. A clearance exists between the side wall of the screen component 100 and the border frame portion 212 of the middle frame 210. The clearance forms a protective gap. Furthermore, the protective glue 400a is pressed by the side wall of the screen component 100, so that the protective glue layer 400 that is subsequently cured and formed can tightly connect the screen component 100 to the border frame portion 212 of the middle frame 210, thereby ensuring that the protective glue layer 400 can have a sufficient protective function.

Before the screen component 100 is mounted on the middle frame 210, a protection cover plate 120 and a display screen 110 may be assembled together in advance. For example, the protection cover plate 120 and the display screen 110 may be connected by using the foregoing optical clear adhesive.

It should be noted that, an amount of the protective glue 400a applied to the border frame portion 212 of the middle frame 210 usually needs to be greater than an amount of actually desired glue for filling the protective gap, to ensure that the protective glue 400a can fully fill the protective gap and tightly connect the screen component 100 to the border frame portion 212. After the screen component 100 is mounted on the middle frame 210, the screen component 100 squeezes out redundant protective glue 400a, and the redundant protective glue 400a spills out of the front end surface of the border frame portion 212. In this case, the protective glue 400a that spills out of the front end surface of the border frame portion 212 needs to be wiped away. Referring to FIG. 11(c), a surface of the protective glue 400a is approximately flush with the front end surface of the border frame portion 212. The protective glue 400a is almost entirely located in the protective gap. The border frame portion 212 may support the protective glue 400a to locate the protective glue 400a, which facilitates the curing and formation of the protective glue 400a. In addition, after the protective glue 400a is cured and formed, the protective glue layer 400 is located in a shield region of the border frame portion 212, and the border frame portion 212 may protect the protective glue layer 400 from being scraped or abraded.

In addition, in this embodiment, an example in which the protective glue 400a is first applied to the border frame portion 212 of the middle frame 210 and then the screen component 100 is mounted to the middle frame 210 is used. In this way, it can be ensured that an application amount of the protective glue 400a is sufficient. Under the pressing action of the screen component 100, it can be ensured that the protective glue 400a tightly fills the gap between the screen component 100 and the border frame portion 212. In some other implementations, provided that the protective glue 400a can full fill the protective gap between the screen component 100 and the border frame portion 212, the screen component 100 may be first mounted on the middle plate portion 211 of the middle frame 210. The protective gap is first formed between the screen component 100 and the border frame portion 212 of the middle frame 210. Next, the protective glue 400a is applied into the protective gap. Due to the flowability of the protective glue 400a, the protective glue 400a fully fills the protective gap along the gap width. This is not limited in this embodiment.

S300: Cure the protective glue to form a protective glue layer.

Referring to FIG. 11(d), after the screen component 100 is mounted to the middle frame 210, the protective glue 400a is pressed tightly, and the redundant protective glue 400a is wiped away, the protective glue 400a is cured to form the stable protective glue layer 400. The cured and formed protective glue layer 400 has a high-modulus portion 410 and a low-modulus portion 420. The high-modulus portion 410 is close to a front surface of the screen component 100, and the low-modulus portion 420 is located on one side of the high-modulus portion 410 facing the middle plate portion 211. Namely, the high-modulus portion 410 is located on one side of the low-modulus portion 420 facing away from the middle plate portion 211.

In this way, in the formed protective glue layer 400, the high-modulus portion 410 has a high modulus and high hardness, and the low-modulus portion 420 has a low modulus and good elasticity, so that through the high-modulus portion 410 and the low-modulus portion 420, the protective glue layer 400 can have both a protective function and a buffering function, can prevent foreign matters from entering the display screen 110 and protect the working performance of the display screen 110, and can provide buffering between the border frame portion 212 of the middle frame 210 and the side wall of the screen component 100, to prevent the screen component 100 from being damaged.

For example, in the formed protective glue layer 400, a modulus range of the high-modulus portion 410 may be 40 Mpa to 70 Mpa, and a modulus range of the low-modulus portion 420 may be 5 Mpa to 35 Mpa. Details are not elaborated here.

To enable the formed protective glue layer 400 to have the high-modulus portion 410 and the low-modulus portion 420, as described above, the protective glue layer 400 may be cured and formed jointly using two different curing modes, namely, a first curing mode and a second curing mode. In other words, the protective glue 400a may be cured by using the first curing mode and the second curing mode, so that the formed protective glue layer 400 has the high-modulus portion 410 and the low-modulus portion 420.

The first curing mode may be a light curing mode. The light curing mode is, for example, the foregoing UV light curing mode. The second curing mode may be a moisture curing mode. To enable the protective glue 400a to be cured and formed using the light curing mode and the moisture curing mode, main resin that forms the protective glue 400a may include light curing resin and moisture curing resin. In addition, compositions of the protective glue 400a may further include a polyurethane prepolymer, a photoinitiator, a silane coupling agent, a moisture curing catalyst, a rheology modifier, a pigment, and the like.

Referring to FIG. 11(d), during the curing of the protective glue 400a, a light source 3 (e.g. a UV light source) is arranged on one side of the protective glue 400a facing the protection cover plate 120. The protective glue 400a is irradiated using the light source 3, so that a portion of the protective glue 400a close to the protection cover plate 120 undergoes light curing and moisture curing together to form the high-modulus portion 410. Since a portion of the protective glue 400a close to the middle plate portion 211 of the middle frame 210 is far from the light source 3, this portion undergoes only the moisture curing to form the low-modulus portion 420. In the curing process of the protective glue 400a, the entire protective glue 400a may react with water modules in the air to be cured. This curing mode is the moisture curing mode.

It should be noted that FIG. 11 makes an explanation by using an example in which the display screen 110 carrying the screen component 100 is an OLED display screen 110a. For a case in which a ground layer (not shown) is arranged at a back surface of the OLED display screen 110a, when the protective glue 400a is applied, the amount of glue may be properly increased. After the screen component 100 is mounted on the middle frame 210, the protective glue 400a is pressed to extend to the back surface of the OLED display screen 110a, so that the protective glue 400a connects the protection cover plate 120 to the ground layer at the back surface of the OLED display screen 110a, thereby eliminating static charges and solving problems such as a green screen, non-uniform brightness, and screen flicker.

Referring to FIG. 12, FIG. 12 is described by using an example in which the display screen 110 on the screen component 100 is an LCD screen 110b. A technological process of assembling the screen component 100 carrying the LCD screen 110b to the middle frame 210 is similar to the technological process of assembling the screen component 100 carrying the OLED display screen 110a to the middle frame 210, and details are not elaborated here.

Referring to FIG. 12(a), for several sides, which are similar to the structure of the screen component 100 carrying the OLED display screen 110a, of the screen component 100 carrying the LCD screen 110b, for example, a top side, a left side, and a right side of the screen component 100 carrying the LCD screen 110b, since the back surface of the LCD screen 110b does not have the ground layer, during glue application, the amounts of glue on these sides can be controlled to be similar to the amount of glue on the screen component 100 carrying the OLED display screen 110a, to make the protective glue layer 400 extend to the back surface of the LCD screen 110b. Alternatively, as shown in FIG. 12(a), the amounts of glue on these sides may be appropriately reduced, to make the protective glue layer 400 only fill the protective gapes, and a clearance exists between the protective glue layer 400 and the middle plate portion 211 of the middle frame 210.

Referring to FIG. 12(b), for the side edge (such as, the bottom side of the screen component 100), provided with the circuit board 130, in the screen component 100 carrying the LCD screen 110b, since the circuit board 130 occupies a space of the protective gap, the formed protective glue layer 400 can be supported at the circuit board 130, and the protective glue layer 400 can cover a space on a side of the protection cover plate 120 and a portion of a space on a side of the LCD screen 110b. Therefore, during the glue application, the amount of glue applied to this side may be correspondingly reduced, to avoid that after the screen component 100 is mounted to the middle frame 210, excessive glue spills out, which causes a waste of the protective glue 400a.

In the descriptions of the embodiments of this application, it should be noted that unless otherwise explicitly specified or defined, the terms such as "mount", "connect", and "connection" should be understood in a broad sense. For example, the connection may be a fixed connection, an indirect connection through an intermediate medium, internal communication between two elements, or interaction between two elements. A person of ordinary skill in the art may understand the specific meanings of the foregoing terms in this application according to specific situations.

The terms such as "first", "second", "third", and "fourth" (if any) in this specification and claims of this application and in the accompanying drawings are used for distinguishing similar objects and not necessarily used for describing any particular order or sequence.

## Claims

1. An electronic device (1), comprising a screen component (100), a middle frame (210), and a protective glue layer (400),
wherein the middle frame (210) comprises a middle plate portion (211) and a border frame portion (212); the border frame portion (212) is arranged around a peripheral side of the middle plate portion (211); the screen component (100) is supported on the middle plate portion (211); a protective gap is provided between a side wall of the screen component (100) and the border frame portion (212); the protective glue layer (400) fills the protective gap;
the protective glue layer (400) comprises a high-modulus portion (410) and a low-modulus portion (420) in a thickness direction; and the high-modulus portion (410) is located on one side of the low-modulus portion (420) facing away from the middle plate portion (211),
wherein there is a clearance between the protective glue layer (400) and the middle plate portion (211).

2. The electronic device (1) according to claim 1, wherein the screen component (100) comprises a display screen (110) and a protection cover plate (120); the display screen (110) is connected to the middle plate portion (211); the protection cover plate (120) is located on one side of the display screen (110) facing away from the middle plate portion (211);
the high-modulus portion (410) extends from a side of the protection cover plate (120) to a side of the display screen (110); and the low-modulus portion (420) covers at least a portion of a region of the side of the display screen (110).

3. The electronic device (1) according to claim 2, wherein one end, oriented to the protection cover plate (120), of a side wall of the display screen (110) is located in a range covered by the low-modulus portion (420).

4. The electronic device (1) according to claim 2, wherein one end of the border frame portion (212) extending to a side of the protection cover plate (120) is a front end surface of the border frame portion (212), and the protective glue layer (400) extends from the front end surface to the middle plate portion (211).

5. The electronic device (1) according to any one of claims 2 to 4, wherein a back adhesive layer (300) is arranged between the display screen (110) and the middle plate portion (211).

6. The electronic device (1) according to claim 5, wherein the display screen (110) is an organic light-emitting diode, OLED, display screen.

7. The electronic device (1) according to claim 6, wherein a ground layer is arranged on one side of the OLED display screen facing the middle plate portion (211), and the protective glue layer (400) extends to be in contact with a surface of the ground layer.

8. The electronic device (1) according to claim 7, wherein the protective glue layer (400) extends to be connected to an end surface of the back adhesive layer (300).

9. The electronic device (1) according to claim 5, wherein the display screen (110) is a liquid crystal display, LCD, screen.

10. The electronic device (1) according to claim 9, wherein at least one side of the LCD screen is connected with a circuit board (130); the circuit board (130) is located in the protective gap; and the protective glue layer (400) is supported on the circuit board (130).

11. The electronic device (1) according to any one of claims 1 to 10, wherein a modulus range of the high-modulus portion is 40 Mpa to 70 Mpa, and a modulus range of the low-modulus portion is 5 Mpa to 35 Mpa.

12. The electronic device (1) according to any one of claims 1 to 11, wherein the protective glue layer (400) is an adhesive layer formed by joint curing by a first curing mode and a second curing mode.

13. The electronic device (1) according to claim 12, wherein the first curing mode is a light curing mode, and the second curing mode is a moisture curing mode.

14. The electronic device according to any one of claims 1 to 13, wherein a depth range of the high-modulus portion is 0.4 mm to 0.6 mm in a thickness direction of the screen component (100).

15. The electronic device (1) according to any one of claims 1 to 14, wherein the electronic device further comprises a rear cover (220), wherein the rear cover (220) is connected to the middle frame (210), and the rear cover (220) is located on one side of the middle frame (210) facing away from the screen component (100).

## Patentansprüche

1. Elektronische Vorrichtung (1), umfassend eine Bildschirmkomponente (100), einen Mittelrahmen (210) und eine Schutzklebeschicht (400),
wobei der Mittelrahmen (210) einen Mittelplattenabschnitt (211) und einen Rahmenabschnitt (212) umfasst; wobei der Rahmenabschnitt (212) um eine Umfangseite des Mittelplattenabschnitts (211) herum angeordnet ist; wobei die Bildschirmkomponente (100) auf dem Mittelplattenabschnitt (211) gelagert ist; wobei ein Schutzspalt zwischen einer Seitenwand der Bildschirmkomponente (100) und dem Rahmenabschnitt (212) vorgesehen ist; wobei die Schutzklebeschicht (400) den Schutzspalt ausfüllt;
wobei die Schutzklebeschicht (400) in Dickenrichtung einen Abschnitt mit hohem Modul (410) und einen Abschnitt mit niedrigem Modul (420) umfasst; und wobei der Abschnitt mit hohem Modul (410) auf der vom Mittelplattenabschnitt (211) abgewandten Seite des Abschnitts mit niedrigem Modul (420) angeordnet ist,
wobei zwischen der Schutzklebeschicht (400) und dem Mittelplattenabschnitt (211) ein Freiraum vorhanden ist.

2. Elektronische Vorrichtung (1) nach Anspruch 1, wobei die Bildschirmkomponente (100) einen Anzeigebildschirm (110) und eine Schutzabdeckplatte (120) umfasst; wobei der Anzeigebildschirm (110) mit dem Mittelplattenabschnitt (211) verbunden ist; wobei die Schutzabdeckplatte (120) auf der vom Mittelplattenabschnitt (211) abgewandten Seite des Anzeigebildschirms (110) angeordnet ist;
wobei sich der Abschnitt mit hohem Modul (410) von einer Seite der Schutzabdeckplatte (120) zu einer Seite des Anzeigebildschirms (110) erstreckt; und wobei der Abschnitt mit niedrigem Modul (420) zumindest einen Teil eines Bereichs der Seite des Anzeigebildschirms (110) bedeckt.

3. Elektronische Vorrichtung (1) nach Anspruch 2, wobei ein zur Schutzabdeckplatte (120) hin ausgerichtetes Ende einer Seitenwand des Anzeigebildschirms (110) in einem vom Abschnitt mit niedrigem Modul (420) bedeckten Bereich liegt.

4. Elektronische Vorrichtung (1) nach Anspruch 2, wobei ein Ende des Rahmenabschnitts (212), das sich zu einer Seite der Schutzabdeckplatte (120) hin erstreckt, eine vordere Endfläche des Rahmenabschnitts (212) bildet, und die Schutzklebeschicht (400) sich von der vorderen Endfläche zum Mittelplattenabschnitt (211) erstreckt.

5. Elektronische Vorrichtung (1) nach einem der Ansprüche 2 bis 4, wobei eine rückseitige Klebeschicht (300) zwischen dem Anzeigebildschirm (110) und dem Mittelplattenabschnitt (211) angeordnet ist.

6. Elektronische Vorrichtung (1) nach Anspruch 5, wobei der Anzeigebildschirm (110) ein organischer Leuchtdioden-Anzeigebildschirm, OLED-Anzeigebildschirm, ist.

7. Elektronische Vorrichtung (1) nach Anspruch 6, wobei auf der dem Mittelplattenabschnitt (211) zugewandten Seite des OLED-Anzeigebildschirms eine Erdungsschicht angeordnet ist und die Schutzklebeschicht (400) sich bis zur Berührung mit einer Oberfläche der Erdungsschicht erstreckt.

8. Elektronische Vorrichtung (1) nach Anspruch 7, wobei sich die Schutzklebeschicht (400) erstreckt, um mit einer Endfläche der rückseitigen Klebeschicht (300) verbunden zu sein.

9. Elektronische Vorrichtung (1) nach Anspruch 5, wobei der Anzeigebildschirm (110) ein Flüssigkristallanzeige-, LCD-, Bildschirm ist.

10. Elektronische Vorrichtung (1) nach Anspruch 9, wobei mindestens eine Seite des LCD-Bildschirms mit einer Leiterplatte (130) verbunden ist; die Leiterplatte (130) sich im Schutzspalt befindet; und die Schutzklebeschicht (400) auf der Leiterplatte (130) abgestützt ist.

11. Elektronische Vorrichtung (1) nach einem der Ansprüche 1 bis 10, wobei ein Modulbereich des Abschnitts mit hohem Modul 40 MPa bis 70 MPa beträgt und ein Modulbereich des Abschnitts mit niedrigem Modul 5 MPa bis 35 MPa beträgt.

12. Elektronische Vorrichtung (1) nach einem der Ansprüche 1 bis 11, wobei die Schutzklebeschicht (400) eine Klebeschicht ist, die durch gemeinsames Aushärten mittels eines ersten Aushärtungsmodus und eines zweiten Aushärtungsmodus gebildet wird.

13. Elektronische Vorrichtung (1) nach Anspruch 12, wobei der erste Aushärtungsmodus ein Lichtaushärtungsmodus ist und der zweite Aushärtungsmodus ein Feuchtigkeitsaushärtungsmodus ist.

14. Elektronische Vorrichtung nach einem der Ansprüche 1 bis 13, wobei ein Tiefenbereich des Abschnitts mit hohem Modul in einer Dickenrichtung der Bildschirmkomponente (100) 0,4 mm bis 0,6 mm beträgt.

15. Elektronische Vorrichtung (1) nach einem der Ansprüche 1 bis 14, wobei die elektronische Vorrichtung ferner eine Rückabdeckung (220) umfasst, wobei die Rückabdeckung (220) mit dem Mittelrahmen (210) verbunden ist und die Rückabdeckung (220) auf einer von der Bildschirmkomponente (100) abgewandten Seite des Mittelrahmens (210) angeordnet ist.

## Revendications

1. Dispositif électronique (1), comprenant un composant d'écran (100), un cadre intermédiaire (210) et une couche de colle de protection (400),
dans lequel le cadre intermédiaire (210) comprend une partie plaque intermédiaire (211) et une partie cadre de bordure (212) ; la partie cadre de bordure (212) est disposée autour d'un côté périphérique de la partie plaque intermédiaire (211) ; le composant d'écran (100) est supporté sur la partie plaque intermédiaire (211) ; un espace de protection est prévu entre une paroi latérale du composant d'écran (100) et la partie cadre de bordure (212) ; la couche de colle de protection (400) remplit l'espace de protection ;
la couche de colle de protection (400) comprend une partie à haut module (410) et une partie à bas module (420) dans une direction d'épaisseur ; et la partie à haut module (410) est située sur un côté de la partie à bas module (420) orienté à l'opposé de la partie plaque intermédiaire (211),
dans lequel il existe un jeu entre la couche de colle de protection (400) et la partie plaque intermédiaire (211).

2. Dispositif électronique (1) selon la revendication 1, dans lequel le composant d'écran (100) comprend un écran d'affichage (110) et une plaque de recouvrement de protection (120) ; l'écran d'affichage (110) est connecté à la partie plaque intermédiaire (211) ; la plaque de recouvrement de protection (120) est située sur un côté de l'écran d'affichage (110) orienté à l'opposé de la partie plaque intermédiaire (211) ;
la partie à haut module (410) s'étend d'un côté de la plaque de recouvrement de protection (120) vers un côté de l'écran d'affichage (110) ; et la partie à bas module (420) recouvre au moins une partie d'une région du côté de l'écran d'affichage (110).

3. Dispositif électronique (1) selon la revendication 2, dans lequel une extrémité, orientée vers la plaque de recouvrement de protection (120), d'une paroi latérale de l'écran d'affichage (110) est située dans une plage couverte par la partie à bas module (420).

4. Dispositif électronique (1) selon la revendication 2, dans lequel une extrémité de la partie cadre de bordure (212) s'étendant vers un côté de la plaque de recouvrement de protection (120) est une surface d'extrémité avant de la partie cadre de bordure (212), et la couche de colle de protection (400) s'étend de la surface d'extrémité avant vers la partie plaque intermédiaire (211).

5. Dispositif électronique (1) selon l'une quelconque des revendications 2 à 4, dans lequel une couche adhésive arrière (300) est disposée entre l'écran d'affichage (110) et la partie plaque intermédiaire (211).

6. Dispositif électronique (1) selon la revendication 5, dans lequel l'écran d'affichage (110) est un écran d'affichage à diode électroluminescente organique, OLED.

7. Dispositif électronique (1) selon la revendication 6, dans lequel une couche de masse est disposée sur un côté de l'écran d'affichage OLED faisant face à la partie plaque intermédiaire (211), et la couche de colle de protection (400) s'étend pour être en contact avec une surface de la couche de masse.

8. Le dispositif électronique (1) selon la revendication 7, dans lequel la couche de de protection (400) s'étend pour être connectée à une surface d'extrémité de la couche adhésive arrière (300).

9. Le dispositif électronique (1) selon la revendication 5, dans lequel l'écran d'affichage (110) est un écran à cristaux liquides, LCD.

10. Le dispositif électronique (1) selon la revendication 9, dans lequel au moins un côté de l'écran LCD est connecté à une carte de circuit imprimé (130) ; la carte de circuit imprimé (130) est située dans l'espace de protection ; et la couche de de protection (400) est supportée sur la carte de circuit imprimé (130).

11. Le dispositif électronique (1) selon l'une quelconque des revendications 1 à 10, dans lequel une plage de module de la partie à haut module est comprise entre 40 MPa et 70 MPa, et une plage de module de la partie à bas module est comprise entre 5 MPa et 35 MPa.

12. Le dispositif électronique (1) selon l'une quelconque des revendications 1 à 11, dans lequel la couche de de protection (400) est une couche adhésive formée par un durcissement conjoint par un premier mode de durcissement et un second mode de durcissement.

13. Le dispositif électronique (1) selon la revendication 12, dans lequel le premier mode de durcissement est un mode de durcissement par lumière, et le second mode de durcissement est un mode de durcissement par humidité.

14. Le dispositif électronique selon l'une quelconque des revendications 1 à 13, dans lequel une plage de profondeur de la partie à haut module est comprise entre 0,4 mm et 0,6 mm dans une direction d'épaisseur du composant d'écran (100).

15. Le dispositif électronique (1) selon l'une quelconque des revendications 1 à 14, dans lequel le dispositif électronique comprend en outre un capot arrière (220), dans lequel le capot arrière (220) est connecté au cadre intermédiaire (210), et le capot arrière (220) est situé sur un côté du cadre intermédiaire (210) opposé au composant d'écran (100).
